Europäisches Patentamt

**European Patent Office**

**Office européen des brevets**

(11) Veröffentlichungsnummer: **0 030 744**

**A1**

(12) # EUROPÄISCHE PATENTANMELDUNG

(21) Anmeldenummer: **80201016.5**

(22) Anmeldetag: **27.10.80**

(51) Int. Cl.³: **F 02 C 6/16**
B 65 G 5/00, E 21 F 17/16

(30) Priorität: **05.12.79 CH 10785/79**

(43) Veröffentlichungstag der Anmeldung:
**24.06.81 Patentblatt 81/25**

(84) Benannte Vertragsstaaten:
**CH DE FR GB LI SE**

(71) Anmelder: **BBC Brown, Boveri & Cie.
(Aktiengesellschaft)**

**CH-5401 Baden(CH)**

(72) Erfinder: **Schwarzenbach, Alfred, Dipl.-Ing.
Weizenstrasse 5
D-5430 Wettingen(CH)**

(54) **Gleichdruckluftspeicheranlage mit Wasservorlage für Gasturbinenkraftwerke.**

(57) Gleichdruckluftspeicheranlage für Gasturbinenkraftwerke, mit einer Kaverne (1) und einer Wasservorlage (2,3,4),
wobei zur Verringerung der Wirbelbildung im Wasser und
damit der Diffusion von Luft in das Wasser der Wasservorlage
Mittel (5) vorgesehen sind, die dazu dienen, die beim Laden
und Entladen des Luftraums der Kaverne auftretende Wasserströmung gleichmässig über den Kavernengrundriss zu
verteilen und ihre Geschwindigkeit zu vergleichmässigen.

FIG.1

EP 0 030 744 A1

- 1 -

Gleichdruckluftspeicheranlage mit Wasservorlage für Gasturbinenkraftwerke

Die vorliegende Erfindung betrifft eine Gleichdruckluftspeicheranlage mit Wasservorlage für Gasturbinenkraftwerke
nach dem Oberbegriff des Patentanspruchs 1.

Gleichdruckluftspeicheranlagen für Gasturbinenkraftwerke
benötigen gegenüber gleich leistungsfähigen Luftspeicheranlagen mit variablem Luftdruck, der im Betrieb zwischen
gewissen Grenzen schwanken darf, nur etwa ein Drittel des
Volumens der letzteren. Dementsprechend sind der bauliche
Aufwand und die Erstellungskosten einer Kaverne für Gleichdruckspeicherung weit geringer als bei Kavernen für variablen Luftdruck.

Zur Konstanthaltung des Luftdruckes bei Gleichdruckspeicherung dient eine das in der Kaverne verbrauchte Luftvolumen
ausgleichende Wasservorlage mit einer Wassersäule, die in
ein freies, gewöhnlich an der Erdoberfläche liegendes Bassin
mündet und deren statische Druckhöhe dem in der Kaverne aufrechtzuerhaltenden Druck entspricht. Beim Laden der Kaverne,
die bei heutigen Anlagen in 600-800 m Tiefe liegt, entsprechend einem statischen Druck der Wassersäule von 60-80

- 2 -

bar, wird das Wasser in das Bassin hinaufgedrückt, beim
Entladen läuft das Wasser aus dem Bassin in die Kaverne
nach, um den gleichen Druck sicherzustellen.

Beim Betrieb von Luftspeichergasturbinenanlagen hat sich
gezeigt, dass beim Laden der Kaverne die in der Wasservorlage aufsteigende Wassersäule die in ihr gelöste Luft
freigibt, wodurch Luftblasen mit nach oben hin rasch zunehmendem Volumen entstehen, die eine Dichteabnahme in
der Wassersäule und damit einen Druckabfall in der Kaverne
bewirken. Im Extremfall könnte die Wassersäule vom Druckluftpolster ausgeblasen werden und die Kaverne sich somit
vollständig entleeren.

Gegenüber der normalen Lösungsgeschwindigkeit von Luft in
ruhendem Wasser erfolgt in der Kaverne die volle Sättigung
infolge der starken Verwirbelung des Wassers bei den Lade-
und Entladevorgängen rascher, da hierbei bald einmal alle
Wasserteilchen mit der Luft in Berührung kommen. Die dabei
vom Wasser aufgenommene Gewichtsmenge an Luft ist proportional dem Druck, der, wie gesagt, bei ausgeführten Anlagen
zwischen 60 und 80 bar liegt. Ueber die dabei gelöste Luftmenge gibt folgender Vergleich Aufschluss:

Bei 1 bar Luftdruck und $10^{\circ}C$ Temperatur enthält 1 $m^3$ Wasser
(= 1000 kg) 29,2 g Luft.

Bei 60 bar Druck und $10^{\circ}C$ Temperatur enthält 1 $m^3$ Wasser
1,7 kg Luft, also die etwa 58-fache Gewichtsmenge. Bei
Atmosphärendruck entsprechen diese 1,7 kg Luft ca. 1,32 $m^3$.
Ein von 60 bar Druck auf atmosphärischen Druck entspanntes

- 3 -

Wasser/Luft-Gemisch enthält also mehr Luft als Wasser.

Wenn derart mit Luft gesättigtes Wasser aus der Kaverne nach oben steigt, so wird durch den abnehmenden hydrostatischen Druck die Luft frei und bildet immer grössere Blasen. Die durchschnittliche Dichte der Wassersäule wird damit immer kleiner und der Druck in der Kaverne sinkt entsprechend. Dies kann, wenn nicht entsprechende Vorkehrungen getroffen werden, zum Ausblasen des Druckluftpolsters mit der Wassersäule führen.

Eine bisher bekanntgewordene Massnahme zur Verhütung dieses Ausblasens besteht darin, das die Wassersäule enthaltende Steigrohr in einem U-förmigen Bogen unter die Sohle der Kaverne hinab zu verlängern. Der tiefste Punkt des Steigrohrs muss dabei um mindestens 0,15 h unter dem jeweiligen Wasserspiegel in der Kaverne liegen, wobei h die wirksame Druckhöhe, d.h., die Differenz zwischen den geodätischen Höhen des Oberwasserspiegels im Ausgleichsbecken und des Kavernenwasserspiegels bedeutet.

Für h = 600 m würde dies bedeuten, dass das bereits 600 m lange Steigrohr noch um mindestens 90 m tiefer geführt werden müsste, und zwar doppelt, was einen untragbar hohen baulichen Mehraufwand darstellt.

Mit der vorliegenden, im kennzeichnenden Teil des Patentanspruchs 1 definierten Erfindung soll dieser schwerwiegende Nachteil vermieden werden.

Die Erfindung wird im folgenden unter Bezugnahme auf in der

- 4 -

Zeichnung dargestellte Ausführungsbeispiele näher beschrieben.

In der Zeichnung stellen dar:

Fig. 1  schematisch eine erste Ausführungsform einer erfindungsgemässen Gleichdruckluftspeicheranlage in
einem Vertikalschnitt,

Fig. 2  den zu Fig. 1 gehörigen Grundriss in einem waagrechten Schnitt durch den Luftraum der Kaverne,
die

Fig. 3  und 4 den Vertikalschnitt bzw. den Grundriss einer
weiteren Ausführungsform, und die

Fig. 5  einen Vertikalschnitt einer dritten Ausführungsform.

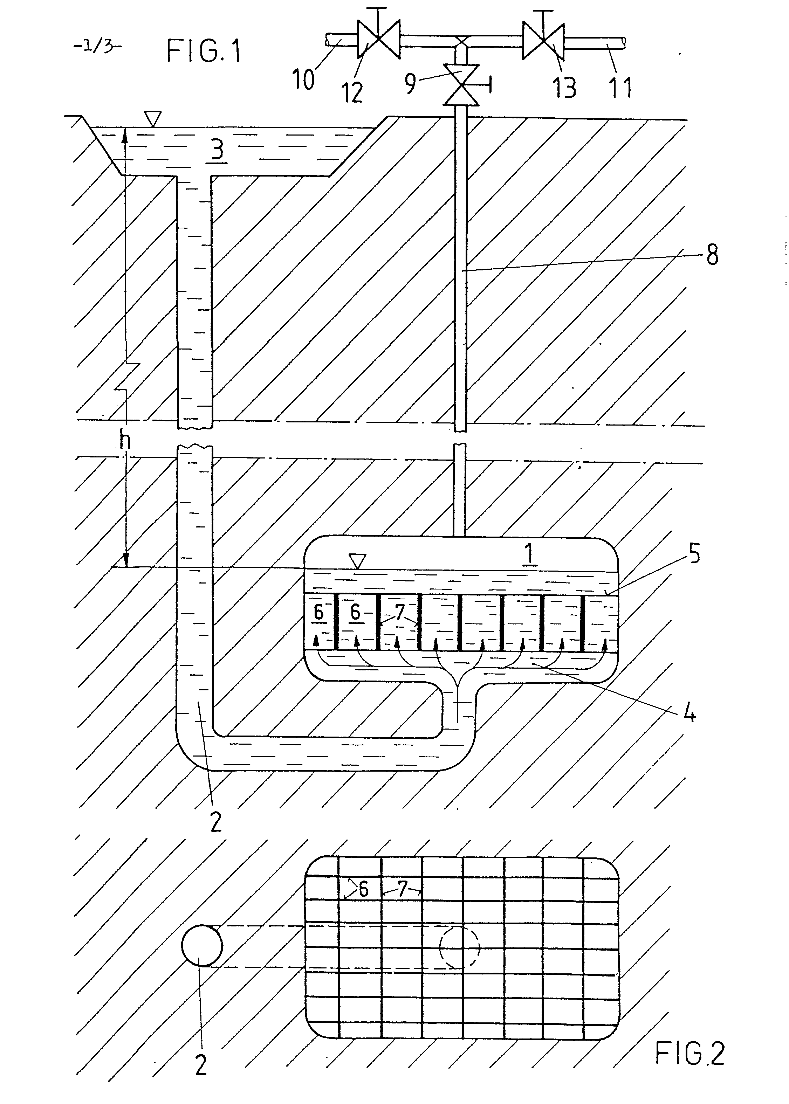

Bei der in Fig. 1 schematisch dargestellten Gleichdruckluftspeicheranlage befindet sich in der Sohle einer Kaverne 1
die Mündung eines Steigrohres 2, dessen oberer druckerzeugender Teil mit der Höhe h zwischen den Wasserspiegeln der
Kaverne 1 und eines Ausgleichsbeckens 3 senkrecht ausgebildet ist. Das Steigrohr setzt sich nach unten in einem U-förmigen Kanal fort, der die genannte Mündung an der Sohle der
Kaverne bildet. Um ein Ausblasen der Wassersäule und damit
der Kavernenluft infolge der eingangs beschriebenen Druckhöhenverminderung der Wassersäule zu vermeiden, müsste sich,
wie ebenfalls in der Einleitung erwähnt, dieser U-förmige
Kanal ohne die erfindungsgemässen Massnahmen um 0,15 h unter
den im Betrieb tiefsten zulässigen Kavernenwasserspiegel

- 5 -

hinab erstrecken, was mit einer wesentlichen Erhöhung der Anlagekosten verbunden ist.

Die Erfindung beruht auf der Idee, das Hin- und Herschwingen der Wassermasse zwischen Kaverne 1 und Steigrohr 2 möglichst wirbelfrei zu gestalten. Je ruhiger die beim Laden und Entladen der Kaverne auftretende Strömung verläuft, umso geringer ist der Anteil der mit der Kavernenluft in Berührung kommenden Wasserteilchen und damit die Sättigung des Kavernenwassers mit Luft. Auf diese Weise kann die Gefahr des Ausblasens des Kavernenwassers durch das Steigrohr beim Ladevorgang vermieden werden. Die zu diesem Zweck in der Speicheranlage vorzusehenden Einrichtungen haben also die Aufgabe, eine möglichst wirbelfreie, laminare Strömung zu ermöglichen.

Bei der in den Fig. 1 und 2 dargestellten Ausführung einer solchen Luftspeicheranlage liegt die Einmündung des Steigrohres 2 an der Kavernensohle in der Mitte seines Grundrisses. Zusammen mit der starken Ausrundung der Mündung ergibt sich hieraus eine gleichmässige, symmetrische Strömungsverteilung in einem flachen, einbautenfreien Raum 4 unmittelbar oberhalb der Kavernensohle. Um die Strömung auch in vertikaler Richtung zu laminarisieren, ist oberhalb des Raumes 4 bis zu der Höhe, die der Wasserspiegel normalerweise erreichen kann, ein Gleichrichtergitter 5 vorgesehen das z.B. aus rechtwinklig zueinander stehenden vertikalen Platten 6 und 7 zusammengesetzt sein kann. Auf diese Weise wird auch die beim Laden und Entladen der Kaverne auftretende vertikale Strömung weitgehend laminarisiert und die Wirbelbildung verringert.

- 6 -

In Fig. 1 bedeutet 8 die Luftentnahmeleitung für die übertage angeordnete, nicht dargestellte Gasturbinenanlage, vor
der ein Hauptabsperrventil 9 sowie in den Luftleitungen 10
bzw. 11, die zur Brennkammer bzw. zum Verdichter der Gasturbinenanlage führen, zwei Umschaltventile 12 bzw. 13 vorgesehen sind.

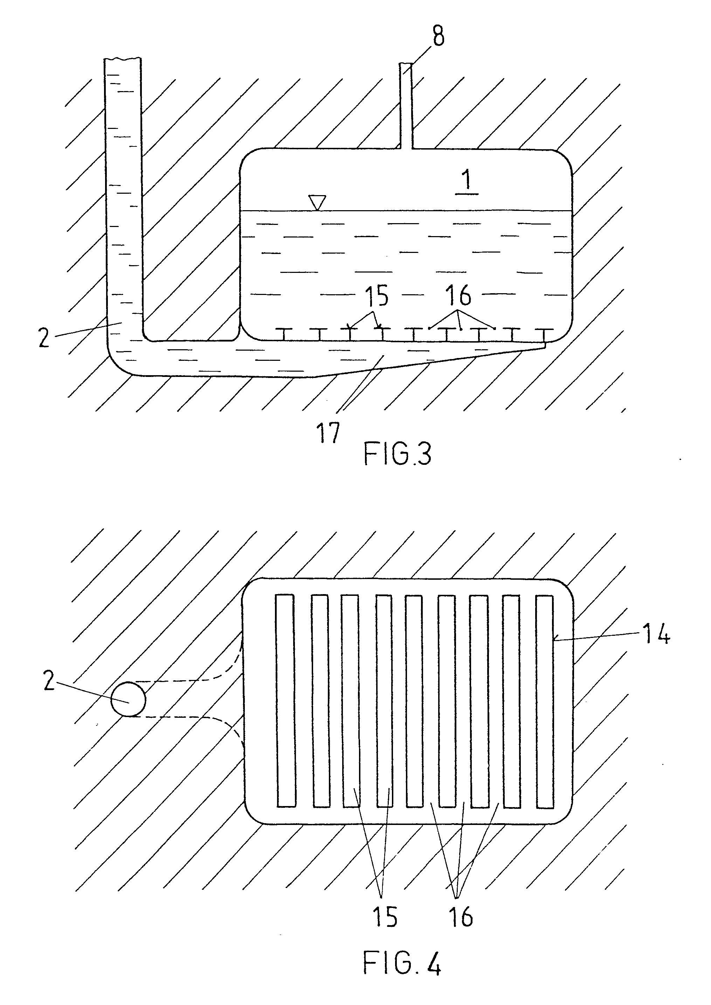

Bei der durch die Fig. 3 und 4 dargestellten Ausführungsform
erfolgt die Laminarisierung der Wasserströmung durch einen
unmittelbar über der Kavernensohle vorgesehenen, aus T-förmigen Profilstäben 15 gebildeten Rost 14, dessen Spalten
16 für eine gleichmässige Verteilung der ein- und austretenden Strömung sorgen. Der waagrechte, unterste Teil des
Steigrohres 2 geht unter Erweiterung auf die Breite der
Kaverne in den Zulaufkanal 17 über, der sich hier direkt
unter der Kavernensohle befindet und dessen Tiefe in Längsrichtung der Kaverne entsprechend der Kontinuitätsbedingung der Strömung abnimmt, um möglichst gleiche Strömungsgeschwindigkeiten zu erhalten. Diese Ausführung mit dem
direkt unter der Kavernensohle vorgesehenen Zulaufkanal 17
ist bautechnisch günstiger als die Zuführung bei der Variante
nach den Fig. 1 und 2 durch das U-förmig abgewinkelte untere
Ende des Steigrohres 2.

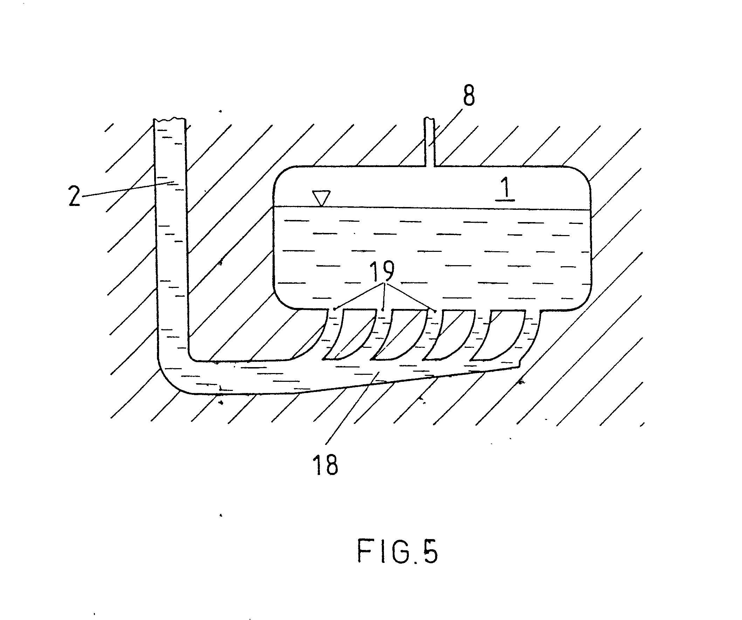

Bei der in einem Vertikalschnitt dargestellten Ausführung
nach Fig. 5 erweitert sich der untere, waagrechte Teil des
Steigrohres 2 unterhalb der Kavernengrundfläche ebenfalls in
einen Zulaufkanal 18 von der Breite der Kaverne, dessen Tiefe
sich in Längsrichtung entsprechend der Kontinuitätsgleichung
verringert. Aus dem Zulaufkanal zweigen über die Kavernengrundfläche regelmässig verteilt in die Kaverne einmündende

- 7 -

Zuflussrohre 19 ab, so dass die Strömung sich ziemlich
gleichmässig über das ganze Kavernenvolumen verteilt und
Wirbel weitgehend vermieden werden.

Alle beschriebenen und weitere denkbare Abwandlungen der
Erfindungen bezwecken also, die beim Laden und Entladen der
Kaverne auftretende Strömung über das Kavernenvolumen
gleichmässig zu verteilen, wobei insbesondere die Geschwindigkeitsgradienten quer zur Strömungsrichtung klein gehalten
werden, um Wirbelbildung und dadurch verstärkte Diffusion
von Luft in das Wasser zu verringern.

- 8 -

Bezeichnungsliste

| | |
|---|---|
| 1 | Kaverne |
| 2 | Steigrohr |
| 3 | Ausgleichsbecken |
| 4 | Einbautenfreier Raum oberhalb der Kavernensohle |
| 5 | Gleichrichtergitter |
| 6, 7 | Platten des Gleichrichtergitters |
| 8 | Luftentnahmeleitung |
| 9 | Hauptabsperrventil |
| 10 | Luftleitung |
| 11 | Luftleitung |
| 12 | Umschaltventil vor der Brennkammer |
| 13 | Umschaltventil vor dem Verdichter |
| 14 | Rost |
| 15 | T-Profilstäbe |
| 16 | Spalten des Rostes 14 |
| 17 | Zulaufkanal |
| 18 | Zulaufkanal |
| 19 | Zuflussrohre |

- 9 -

P a t e n t a n s p r ü c h e

1. Gleichdruckluftspeicheranlage mit Wasservorlage für Gasturbinenkraftwerke, mit einer unterirdischen Kaverne zur Speicherung der Druckluft und Verbindungsleitungen zwischen der Kaverne und dem Verdichter bzw. der Gasturbine, ferner mit einem Ausgleichsbecken und einem dasselbe mit der Kaverne verbindenden Steigrohr, dadurch gekennzeichnet, dass in der Kaverne Mittel (4, 5; 15, 16, 17; 18, 19) zur gleichmässigen Verteilung der beim Laden und Entladen der Kaverne auftretenden Wasserströmung und zur Vergleichmässigung ihrer Strömungsgeschwindigkeit über die ganze Kavernengrundfläche vorgesehen sind.

2. Gleichdruckluftspeicheranlage nach Anspruch 1, dadurch gekennzeichnet, dass die Mittel zur Verteilung und Vergleichmässigung der Strömung aus einem den ganzen horizontalen Kavernenquerschnitt ausfüllenden Gleichrichtergitter (5) bestehen, das aus zwei sich rechtwinklig schneidenden Reihen paralleler Platten (6 bzw. 7) zusammengesetzt ist und zwischen dessen Unterkante und der Kavernensohle ein einbautenfreier Raum (4) vorgesehen ist.

3. Gleichdruckluftspeicheranlage nach Anspruch 1, dadurch gekennzeichnet, dass die Mittel zur Verteilung und Ver-

- 10 -

gleichmässigung der Strömung aus einer Reihe paralleler,
durch einen Spalt (16) voneinander getrennter T-Profilstäbe (15) bestehen, die auf dem Sohlenniveau der Kaverne
in einer Ebene angeordnet sind und die ganze Kavernengrundfläche überdecken, und dass unterhalb der Ebene der
T-Profilstäbe (15) ein Zulaufkanal (17) vorgesehen ist,
der sich im wesentlichen über die Kavernengrundfläche
erstreckt und dessen Tiefe von der Einmündung des Steigrohres (2) beginnend nach allen Seiten hin kontinuierlich abnimmt.

4. Gleichdruckluftspeicheranlage nach Anspruch 1, dadurch
gekennzeichnet, dass unterhalb der Kavernensohle ein
Zulaufkanal (18) vorgesehen ist, der sich im wesentlichen
über die Kavernengrundfläche erstreckt und dessen Tiefe
von der Einmündung des Steigrohres (2) beginnend nach
allen Seiten hin kontinuierlich abnimmt, und dass eine
Mehrzahl von über die Kavernengrundfläche gleichmässig
verteilten Zuflussrohren (19) für die Kaverne vorgesehen
ist, die tangential aus dem Zulaufkanal (18) ausmünden
und rechtwinklig zur Kavernensohle in die Kaverne einmünden.

FIG.1

FIG.2

-1/3-

0030744

FIG.3

FIG.4

FIG.5

Europäisches Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | CHEM.-ING.-TECH., Band 51, Nr. 6, 1979 Seite 414 * linke Spalte, Absatz 2: "Gitterroste aus Kunststoff" * -- | 1,2 | F 02 C 6/16 B 65 G 5/00 E 21 F 17/16 |
| | DE - U - 1 955 723 (APPARATEBAU ROTHE-MÜHLE, BRANDT & KRITZLER) * Seite 1, Absatz 1; Seite 2, Absatz 2 bis Seite 3, Absatz 1 * -- | 1,3 | |
| | | | RECHERCHIERTE SACHGEBIETE (Int. Cl.³) |
| | DE - U - 1 387 896 (R.O. MEYER) * Seite 1 bis Seite 2, Absatz 1 * -- | 1,4 | |
| A | BBC-NACHRICHTEN, Band 57, Nr. 7, 1975 Seiten 401 bis 406 * Seite 406; Fig. 5 * ---- | 1 | B 01 D 19/00 B 65 G 5/00 E 21 F 17/00 F 02 C 6/00 F 03 G 7/00 F 15 D 1/00 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort Berlin | Abschlußdatum der Recherche 19-02-1981 | Prüfer STÖCKLE |
|---|---|---|

EPA form 1503.1 06.78